# EUROPEAN PATENT SPECIFICATION

(11) **EP 3 181 798 B1**
(45) Date of publication and mention of the grant of the patent: **12.12.2018**
(21) Application number: 15201052.6
(22) Date of filing: 18.12.2015
(51) Int. Cl.: E06B 9/322, E06B 9/42, H02G 11/02

(54) **A SCREENING DEVICE FOR A WINDOW, A METHOD FOR TRANSMITTING SIGNALS IN A SCREENING DEVICE**
VORHANG FÜR EIN FENSTER, VERFAHREN ZUR ÜBERTRAGUNG VON SIGNALEN IN EINEM VORHANG
DISPOSITIF DE BLINDAGE POUR UNE FENÊTRE, PROCÉDÉ DE TRANSMISSION DE SIGNAUX DANS UN DISPOSITIF DE BLINDAGE

(43) Date of publication of application: 21.06.2017
(73) Proprietor: VKR Holding A/S, 2970 Hørsholm (DK)
(72) Inventor: KOLD, Ove, 6900 Skjern (DK); KNUDTZEN, Søren Riisager, 6900 Skjern (DK); PEDERSEN, Søren Søgaard, 5500 Middelfart (DK)
(74) Representative: Patentgruppen A/S

(56) References cited:
- EP-A1- 0 887 508
- EP-B1- 2 098 394
- US-A1- 2008 142 169
- US-A1- 2014 263 796
- US-B1- 6 186 211

## Description

### Background of the invention

The present invention relates to screening devices for architectural opening such as windows, particularly to screening devices comprising electrical motors for operating the screening devices or other electrical devices.

### Description of the Related Art

Motorized screening devices for windows are known in the art. Particularly, in relation to roof windows and skylights the demand for motorized screening devices is pronounced because these types of windows usually are mounted in a relatively remote part of a building and therefore often is difficult to reach or access.

Motorized screening devices need supply of electrical power. Depending on the design of the screening devices it may be necessary to supply a moveable part of a screening device with electrical power. Accordingly, there is a need for supplying electrical power signals or data signals between moveable parts of the screening device.

US 6,186,211 B1 discloses a motorized screening device configured with a flexible conduction ribbon cable which runs along a length of a side of the window. The cable is free to move with a rail which comprises a motor provided for moving the rail.

EP 2 098 394 B1 discloses a motorized screening device, particularly a roller blind, comprising an electrical cable which is incorporated in the screening material.

Whereas US 6,186,211 B1 and EP 2 098 394 B1 provide solutions for supplying electrical power or data signals between moveable parts of screening devices, the free hanging ribbon cable and the incorporated cable may be disadvantageous.

Therefore, it is an object of the invention to provide an alternative solution for supplying electrical power or data signals between moveable parts of shading devices.

### The invention

The invention according to claim 1 provides a screening device for an architectural opening, where the screening device comprises:
a first transversal profile arranged to have a fixed position relative to the architectural opening,
a second transversal profile arranged to be moveable relative to the first transversal profile,
screening means extending between the first and second transversal profiles,
a cable extending between the first transversal profile and the second transversal profile for transmitting a signal between the first transversal profile and the second transversal profile,
where the first transversal profile and/or the second transversal profile comprises a cable reel arranged for rolling off and rolling up the cable dependent on the relative movement between the first transversal profile and the second transversal profile, and where the cable reel is arranged for rolling off the cable by a force transmitted by the cable.

An architectural opening in this context should be interpreted as any kind of window, door, hole and other architectural opening provided in buildings and other structures. For convenience, examples, embodiments and other descriptions are mainly described with reference to windows, but are not limited to use with windows unless otherwise noted.

Advantageously, the cable reel provides a solution for supplying electrical power or data signals between the first and second transversal profiles which enables storage of an excess length of the cable so that only the length of cable required for connecting the first and second transversal profiles is rolled off from the cable reel.

Particularly, since the cable reel is arranged for rolling off the cable by a force transmitted by the cable, e.g. solely transmitted by the cable, the operation of the cable reel may be independent from the screening means. That is, the length of cable rolled off from the cable reel may not be affected by changes in the length of the screening means between the first and second transversal profiles, e.g. due to an excess length of screening means extracted between the transversal profiles while the position of the second transversal profile is unchanged.

Advantageously, since the cable reel is arranged to retract excess length of the cable, the screening means may provide improved lifetime and reliability of the signal connection. That is, the cable reel provides a solution where the cable is rolled off and rolled up in a predictable and reliable way independent on inappropriate user operation of the screening device. For example, in a solution where the cable is incorporated in the screening material, inappropriate use of the screening device, e.g. bending of the screening material may reduce the lifetime of the incorporated cable. In another example, in a solution with a free hanging cable, the free hanging cable may be inappropriately bent or jammed which may reduce the lifetime of the cable.

Advantageously, since operation of the cable reel is independent from the operation of the screening material, the cable reel may be designed to roll the cable up so that the exposure of cable to stresses is reduced, e.g. by using a spool with a relatively large diameter. When the cable reel is combined, e.g. with a roller of a roller blind, the diameter of the cable spool may need to be relatively small due the design of the roller blind, as may be the case when the cable is incorporated in the screening means.

Furthermore, since the cable reel may be seen to be independently arranged relative to the screening means, the cable reel may be used in different types of screening devices, e.g. roller blinds, folding blinds, venetian blinds, etc. Solutions where the cable is incorporated in the screening material may not be suited for incorporation of the screening material in e.g. folding blinds due to the fixed bending locations of the cable.

The first and second transversal profiles may be in the form of elongated profiles, like rails or bars.

It should be noted that the term *"screening means"* in this context should be interpreted as any kind of screen suited for screening a window, i.e. any kind of curtain, drape, blind, shade, shutter or other or any combination thereof.

In an aspect of the invention, the cable reel comprises a spring arranged for rolling up the cable. Advantageously, the spring may be integrated with the cable reel to provide a compact self-retracting cable reel. The cable reel may comprise a rotatable spool. The spring may be arranged as a retracting spring causing rotation of the spool when the second transversal profile is moved towards the first transversal profile, and the spring may be arranged to be tensioned when the spool is rotated by means of a pulling force applied to the cable.

Accordingly, in an aspect of the invention the spring is arranged to be tensioned dependent on the extension of the cable between the first and second transversal profiles and independent on an extension of the screening means between the first and second transversal profiles.

In an aspect of the invention the screening device is configured so that one of the transversal profiles comprises an electrical motor arranged to cause a movement of the second transversal profile. The electrical motor may be operatively arranged together with any of the first or the second transversal profiles so as to provide motorized movement of the second transversal profile.

In an aspect of the invention the electrical motor is arranged to cause the movement of the second transversal profile through interaction with a lifting arrangement. Such lifting arrangements may in general be configured to convert the output of the motor, e.g. shaft rotation, into a movement of the second transversal profile.

In an aspect of the invention the screening device comprises guide means, which when in use, extends transversally at the longitudinal ends of the second transversal profile.

In a related aspect the screening device comprises engaging means arranged to engage with the guide means.

It should be noted that the term *"guide means* " in this context should be interpreted as any kind of guide suited for being engaged by engaging means, i.e. any kind of rail, rack, track, string, chain, timing belt or other or any combination thereof.

Further, it should be noted that the term "*engaging means*" in this context should be interpreted as any kind of engaging device suited for engaging the guide means i.e. any kind of roll, wheel, toothed wheel, gear, disk, pulley, protrusion or other or combination thereof.

In an aspect of the invention the engagement means comprises traction means arranged to be driven by an electrical motor, where the traction means are configured to interact with the guide means.

It should be noted that the term "*traction means*" in this context should be interpreted as any kind of traction device suited for converting the motor output into motion of the second transversal profile through interaction with the guide means, i.e. any kind of roll, wheel, toothed wheel, gear, disk, or other or combination thereof.

In an aspect of the invention one of the first and second transversal profiles comprises an electrical consumer, and the signal comprises electrical power and/or control information. Advantageously, the cable may be used for transmitting electrical power, control information or both, possibly simultaneously. In this context control information may comprise control or data information in the form of electrical or optical control and/or data signals. The electrical consumer may be an electrical motor, a control circuit, a sensor, electrical lights or other electrical device.

In an aspect of the invention the second transversal profile comprises the cable reel. The cable reel may advantageously be placed in the second transversal profile since the first transversal profile normally has limited space for housing the cable reel.

In as aspect of the invention the cable reel is oriented so that the rotation axis of the cable reel, e.g. the rotation axis of the rotatable spool, is perpendicular or substantially perpendicular to a longitudinal extension of the second transversal profile. Advantageously, this orientation may allow use of thin first or second transversal profiles.

In an aspect of the invention the cable reel comprises transmission means arranged for transmitting the signal between a stationary part and a rotatable part of the cable reel, the stationary part being stationary relative to the rotatable part of the cable reel.

It should be noted that the term "*transmission means*" in this context should be interpreted as any kind of transmission device or devices suitable for transferring power or control signals a stationary part and a rotatable part of the cable reel, i.e. any kind of cable, collector shoe, wireless transmission devices, wireless transmitter-receiver pairs based on optical, electrical, electromagnetical, radio frequency or other or combinations thereof.

In an aspect of the invention the transmission means comprises a first cable portion arranged for transmitting the signal between the stationary part and a second cable portion of the cable. Advantageously, use of the first cable portion as the transmission means may provide a stable and reliable solution for transmitting the signal.

In an aspect of the invention the first and second cable portions are arranged to provide a continuous connection between the first and second transversal profiles. A continuous connection, i.e. a non-interrupted electrical path, may be achieved by use of a single cable comprising the first and second cable portions, or first and second cable portions which are electrically connected, e.g. by connectors. A non-interrupted electrical path may be advantageous compared to interrupted electrical paths with respect to reliable transmission of data or control signals.

In an aspect of the invention the cable reel comprises a rotatable spool, a stationary part, a circumscribing part being co-rotational with the spool and at least partially circumscribing the stationary part, a first cable portion having a first end connected to the stationary part and extending from the stationary part to an engagement location of the circumscribing part, a second cable portion comprised by the cable and extending from the engagement location, the first cable portion being connected with the second cable portion, where the second cable portion is arranged to be stored on the rotatable spool, and where the first cable portion is arranged to allow the first cable portion to be rotated around the stationary part at the engagement location.

In an aspect of the invention the cable reel comprises a position means arranged for detecting at least a change of the position of the second transversal profile. The position means may advantageously be arranged together with the cable reel to provide position determination based on the operation of the cable reel.

It should be noted that the term "*position means*" in this context should be interpreted as any kind of position device suited for detecting a change of the position or position of the second transversal profile, i.e. any kind of encoder, tachometer, accelerometer, resistive position detector or other or any combination thereof.

In an aspect of the invention the position means is arranged to transmit position information via the cable, where the position information relates to the detected position change. Advantageously, the position means may be arranged together with the cable reel to provide a simple solution for transmission of the position information via the cable.

The invention according to claim 14 provides a method for transmitting signals in a screening device for an architectural opening, the method comprises moving a first transversal profile and/or a second transversal profile to cause relative movement between the first and second profiles,
rolling off a cable from a cable reel comprised by the first transversal profile and/or the second transversal profile, where the cable extends between the first transversal profile and the second transversal profile, and where the cable is rolled off by means of a force transmitted by the cable,
transmitting a signal between the first transversal profile and the second transversal profile by means of the cable.

The use of the cable reel may provide an advantageous solution for transmitting signals in a screening device since the cable reel may be arranged to provide a cable connection between the first and second transversal profiles independently from the screening means.

In an aspect of the invention, the method comprises detection of at least a change of the relative movement between the first and second profiles.

In an aspect of the invention, the method comprises transmitting the signal comprising position information relating to the detected change between the first transversal profile and the second transversal profile.

In an aspect of the invention, the method is a method for operating a screening device according to any of the previously mentioned screening devices.

In an aspect of the invention, the invention provides for use of a screening device according to any of the previously mentioned screening devices for screening an architectural opening mounted in an inclined surface of a building.

If the screening device is arranged to screen a window mounted in a vertical wall, the motor and other parts of the screening device could advantageously be mounted in a fixed upper position wherefrom the screening means could be raised and lowered. However, this is not possible - or at least relatively difficult - when the screening device is mounted in an inclined position. In such circumstances it is advantageous that the screening device comprises a driven second transversal profile and guide means so that the screening means can be maintained in close proximity of the window at all times and thereby ensure more efficient screening.

### Figures

The invention will be described in the following with reference to the figures in which
- fig. 1: illustrates an example of a screening device,
- fig. 2: illustrates an embodiment of a screening device comprising a cable and a cable reel,
- figs. 3A-C: illustrate different embodiments of screening devices,
- figs. 4A-C: illustrate different examples of cable reels,
- fig. 5: illustrates another example of a cable reel,
- fig. 6: illustrates a cable reel which comprises a retracting spring,
- fig. 7: illustrates an example of the second transversal profile, and
- fig. 8: illustrates a screening device and a window mounted in an inclined roof surface.

### Detailed description of the invention

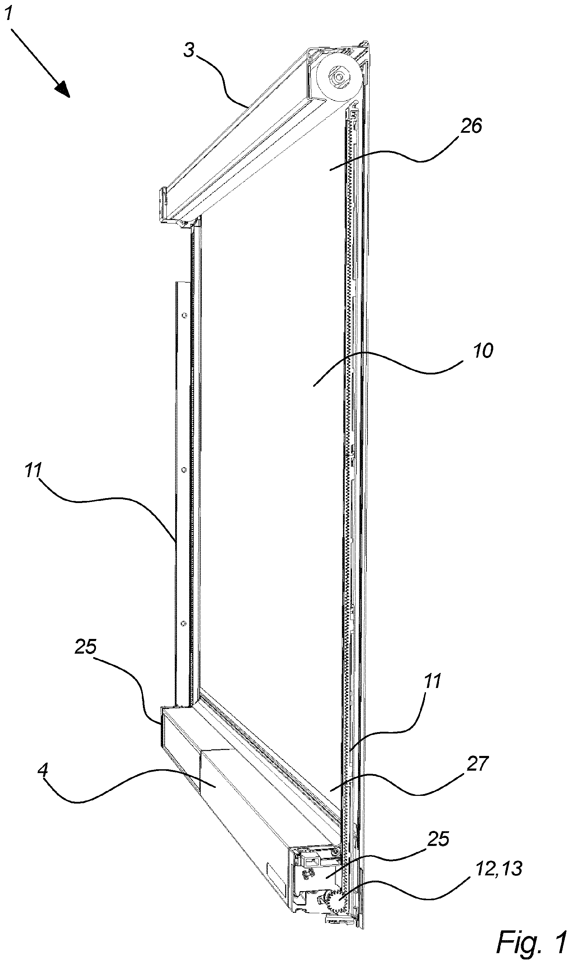

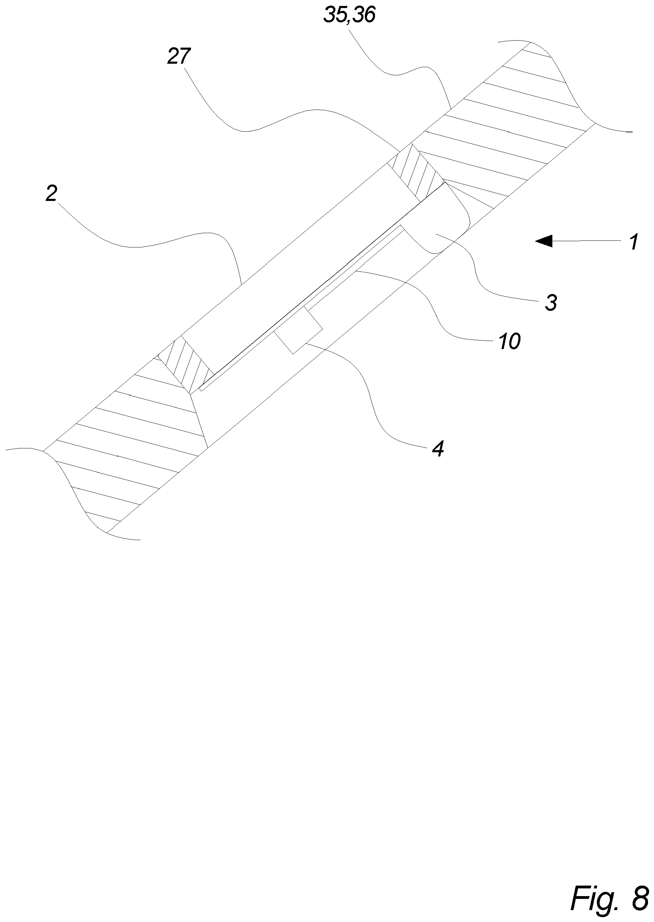

Fig. 1 illustrates an example of a screening device 1 configured to provide screening for an architectural opening, e.g. a window (window 2 in Fig. 8). The screening device comprises a first transversal profile 3 having a fixed position relative to the window 2 and a second transversal profile 4 which is moveably arranged relative to the first transversal profile. The screening device further comprises a screening means 10 extending between the first and second transversal profiles.

The first transversal profile 3 may be connected to a first end 26 of the screening means 10 and the second transversal profile 4 may be connected to a second end 27 of the screening means 10. The first transversal profile 3 may be embodied by a rail, a roller or other profile or support structure suited for holding and/or fixating the upper end 26 of the screening means 10 in relation to a location of the window 2, e.g. an upper location of the window 2.

According to this example of a screening device 1, the screening means 10 is comprised the by screening device 1 and opposite ends of the screening means is connected directly or indirectly with the first and second transversal profiles 3, 4, e.g. indirectly via connection arrangements such as rollers, e.g. rollers provided with connectors suitable for providing a connection with the guiding means. The screening device 1 may be configured to enable replacement of the screening means 10, e.g. by means of first and second transversal profiles comprising connectors arranged to enable a screening means 10 to be connected or re-connected between the transversal profiles.

The example of the screening device 1 in Fig. 1 comprises guide means 11 extending transversally at the longitudinal ends 25 of the second transversal profile 4. The function of the guide means 11 is to guide the second transversal profile 4 when the second transversal profile 4 is moved up or down relative to the first profile, e.g. so that the second transversal profile 4 remains parallel with the first transversal profile 3. Thus, the second transversal profile 4 is arranged to run along guide means 11, e.g. two guide means 11. The second transversal profile may comprise engaging means 12 arranged at the ends 25 of the second transversal profile 4 in order to engage with the guide means. That is, the engaging means 12, in combination with the guide means 11, are configured to provide constraints of the motion of the second transversal profile so that the second transversal profile 4 remains parallel, or substantially parallel, with the first transversal profile 3 during motion.

The example of the screening device 1 in Fig. 1 comprises engaging means 12 in the form of traction means 13 (here toothed wheels) arranged to engage with guide means 11 in the form of racks, i.e. toothed bars, arranged at opposite horizontal sides in the window 2.

Thus, the engaging means 12 may be in the form of a traction means 13 arranged to be driven by an electrical motor so as to provide motorized movement of the second transversal profile, e.g. via friction or toothed interaction between the engaging means 12 and the guide means 11. The electrical motor may be comprised by the second transversal profile 4, alternatively the first transversal profile 3. Alternatively, the engaging means 12 may be in the form of a non-driven engaging means 12, e.g. wheels or protruding members, provided to engage and/or interact with the guide means 11. The engaging means 12 may comprise a combination of traction means 13 and non-driven engaging means 12.

In the example in Fig. 1, the screening means 10 is a simple blind where the first transversal profile 3 comprises a spring loaded roller for rolling off or rolling up the screening means 10 as the transversal profile 4, driven by traction means 13, travels downwards or upwards, respectively.

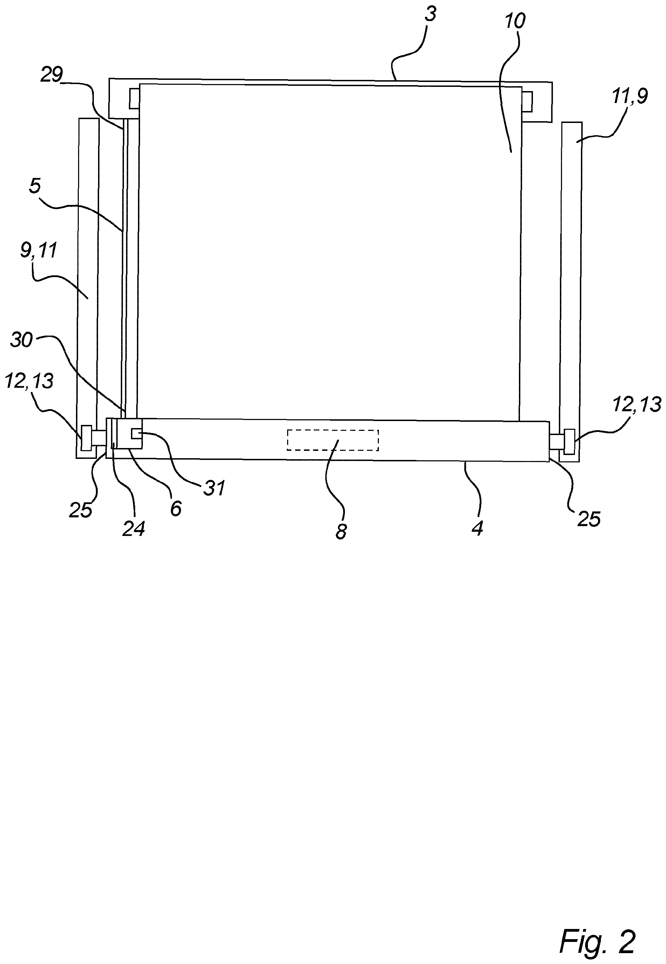

Fig. 2 illustrates an embodiment of the screening device 1 which in addition to the first and second transversal profiles 3, 4 and the screening means 10 comprises a cable 5 and a cable reel 6.

Different embodiments of the screening device 1 described in connection with the example of Fig. 2 and other examples may be configured according to the different configurations of the screening device described in Fig. 1.

The cable 5 extends between the first and second transversal profiles 3, 4 and is provided for transmitting a signal between the first and second transversal profiles. The signal may be an electrical power signal, an electrical data or control signal, an optical data or control signal or a combination thereof. Accordingly, the cable 5 may comprise electrical conductors, optical waveguides or a combination thereof. According to an embodiment, the cable comprises two electrical conductors for transmission of electrical power and electrical control signals. The cable 5 may be a ribbon cable a round cable or have other cross-sectional shapes.

The cable reel 6 may be comprised by the first transversal profile 3 or the second transversal profile 4. Alternatively, both the first and second transversal profile may comprise a cable reel.

The cable reel 6 is arranged for rolling off and rolling up the cable dependent on the relative movement between the first transversal profile and the second transversal profiles 3, 4. Accordingly, dependent on the position of the second transversal profile relative to the first transversal profile, the cable reel 6 is arranged for releasing a length of the cable 5 to enable wired transmission of a signal from the first transversal profile 3 to the second transversal profile 4 or vice versa. Accordingly, the cable reel 6 is arranged for rolling off (paying out) cable 5 between the transversal profiles 3,4 as the distance between the profiles increases, and for rolling up (re-storing) cable as the distance between the profiles 3,4 decreases.

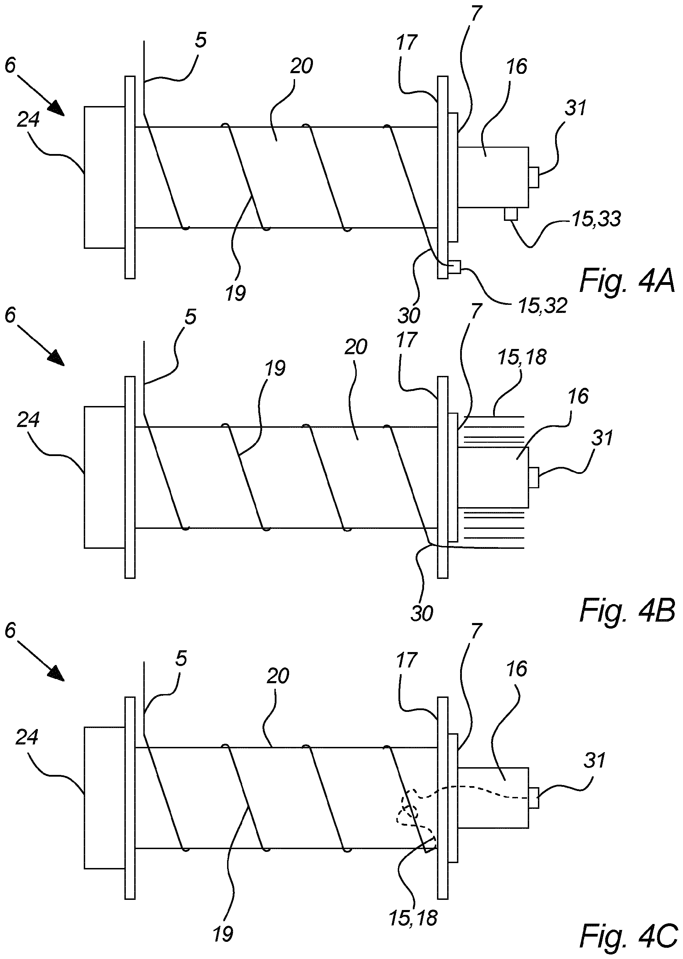

According to an embodiment, the cable reel 6 comprises a rotatable spool (spool 20 in Figs. 4A-C) arranged for rolling off and rolling up the cable. Preferably, the cable reel 6 comprises a spring (spring 7 in Figs. 4A-C) arranged for rolling up the cable. That is, in a tensioned state, the spring is capable of rotating the spool for rolling up the cable. Similarly, when the cable is rolled off from the spool, e.g. via a pulling force transmitted by the cable, the spring is tensioned.

Accordingly, cable reel 6 may be arranged for rolling off the cable by a force transmitted by the cable 5, i.e. by a force solely transmitted by the cable. In other words, the cable reel 6 and the spring 7 may be arranged so that the spring is tensioned dependent on the extension of the cable between the first and second transversal profiles and independent on an extension of the screening means 10 between the first and second transversal profiles. That is, even though the screening device 1 is arranged so that both the cable 6 and the screening means 10 are extracted dependent on the position of the second transversal profile 4, the cable rolled off from the cable reel 6 remains tensioned even if an excessive length of the screening means is rolled off from a blind roller. By an excessive length is meant that the total length of the screening means 10 between the first and second transversal profiles is longer than the distance between the first and second transversal profiles. Accordingly, the function of the cable reel 6 may be seen as being independent of the screening means 10.

According to an embodiment, the screening device 1 may be configured so that one of the transversal profiles comprises an electrical motor 8 schematically illustrated in Fig. 2. The electrical motor 8 is arranged to cause movement of the second transversal profile, e.g. through interaction with a lifting arrangement 9. Thus, the electrical motor 8 may be arranged to interact with a lifting arrangement 9, e.g. directly or indirectly via suitable mechanical conversion structures such as gears. In other embodiments of screening devices which are not provided with an electrical motor 8, the second profile may be manually moved either directly or via a manual interaction with the lifting arrangement. For example, a cord based system may be manually actuated through a pull in a cord. The screening device 1 provided with an electrical motor 8 may be configured so that the second transversal profile 2 can be moved by the motor 8 or manually, e.g. by pulling or pushing the second transversal profile 4.

The lifting arrangement 9 may be in the form of traction means 13 (e.g. toothed wheels) arranged to engage with guide means 11 (e.g. toothed bars) as described in connection with Fig. 1. The lifting arrangement 9 may be any arrangement capable of lifting the second transversal profile 4 though interaction with an electrical motor 8 or through manual interaction with the lifting arrangement. Other examples of lifting arrangements 9 include arrangements based on toothed belts or cord based systems. An example of a cord based system which interacts with a motor via a system of pulleys is provided in US 2008/0142169 A1, hereby incorporated by reference, e.g. as descried in par. 0016. The lifting arrangement could also be a roller of a blind roller which is driven by an electrical motor, i.e. a roller arranged for rolling off or rolling up the screening means 10.

The electrical motor 8 may be comprised by the first or second transversal profiles 3, 4. For example, in a screening device 1 comprising a spring retracted roller blind, the electrical motor could be arranged together with the second transversal profile for providing movement of the second transversal profile 4 through interaction with a lifting arrangement 9. In another example, the motor 8 is arranged together with the first transversal profile, e.g. for interacting with a roller, a cord based system or other lifting arrangement.

A distal end or portion 29 of the cable 5 is arranged to engage one of the transversal profiles which does not comprise the cable reel 6 and a proximal end or portion 30 of the cable 5 is arranged to engages with the cable reel 6 arranged with the other transversal profile. The arrangement of the cable ends 29, 30 to engage the transversal profiles and the cable reel, may comprise a fixed connection or a connectable connection. The connectable connection may by embodied by a connector enabling the cable 5 to be connected with a connection part or connector of the transversal profile or cable reel.

The cable reel may be configured with a stationary transmission part 31 arranged to receive the signal, e.g. from an electrical or optical source, and/or to transmit the signal, e.g. to an electrical consumer or optical receiver. The cable reel 6 is configured to transmit the signal between the stationary transmission part 31 and the proximal end 30, e.g. from the transmission part 31 to the proximal end 30, vice versa or both ways. Accordingly, the cable reel 6 and the cable 5 constitutes a transmission path for transmitting a signal between the distal cable end 29 and the stationary transmission part 31 of the cable reel 6.

The cable 5 and cable reel 6 can be used for transmitting any signal between the first and second transversal profiles 3, 4. For example, the stationary transmission part 31 or the distal cable end 29 may be connected or connectable with an electrical power source for transmitting a power signal to the second transversal profile 4, e.g. for powering an electrical motor 8 arranged together with the second transversal profile.

The power signal may also be used for powering other consumers of electrical power than electrical motors 8. The consumers of electrical power may be comprised by the first or second transversal profiles 3, 4, or in general by screening device 1. For example, a consumer of electrical power may comprise lights. The lights may be comprised by the screening device 1, e.g. the second transversal profile 4.

The electrical power source may be a battery powered source, a mains powered source or other source.

The cable 5 and cable reel 6 may also be used for transmitting data signals or control signals between the first and second transversal profiles 3, 4. For example, control signals may be transmitted from a controller housed in one of the transversal profiles 3, 4 to the other transversal profile 3, 4. The control signals may be transmitted simultaneously with the power signals through the same conducting wires, e.g. a pair of wires. In case of optical signals, these may be transmitted in optical fibres comprised in a cable 5 which optionally also comprises electrically conducting wires for transmission of electrical signals.

According to an embodiment the cable reel, or other component of the screening device 1 such as the second transversal profile 4, comprises a position means 24 arranged for detecting at least a change of the position of the second transversal profile 4. The position means 24 may be arranged to transmit position information via the cable 5. The position information relating to the detected position change may be in the form of a data signal. The position means 24 may be embodied by rotary encoders, e.g. Hall Effect rotary encoders which do not need supply of external power. Such Hall Effect rotary encoders are capable of sending position information, e.g. via the cable 5. Advantageously, a transversal profile 3, 4 which is not supplied with electrical power may comprise such Hall Effect rotary encoders or other self-powered encoders.

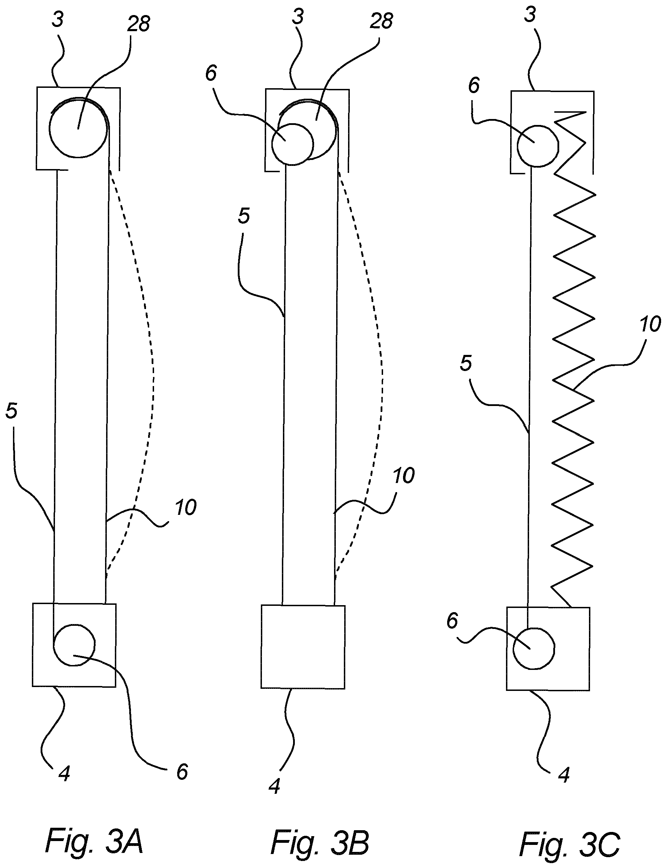

Figs. 3A-C illustrate different embodiments of the screening device 1. Fig. 3A illustrates a side view of an embodiment of the screening device 1 where the cable reel 6 is arranged together with the second transversal profile 4. The first transversal profile 3 comprises a roller 28, i.e. a blind roller, and one end of the screening means 10 is connected to the roller and the opposite end of the screening means 10 is connected to the second transversal profile 4. The cable 5 extends between the first transversal profile and the cable reel 6. As previously described, due to the configuration of the screening device 1 and the cable reel 6, the function of the cable reel is independent of the screening means 10 in the sense that the length of cable 5 rolled off from the cable reel 6 depends on the location of the second transversal profile 4 relative to the first transversal profile 3, but does not depend on the length of the screening means 1 extending between the first and second transversal profiles. To illustrate this, the screening means 10 may be pulled out in a direction perpendicular to the window area, i.e. as illustrated by the dashed curve in Figs. 3A-B, while the cable 5 remains tensioned, i.e. tight, between the first and second transversal profiles. As illustrated, the cable 5 is distanced from the screening means 10 in a direction perpendicular to the longitudinal direction of the transversal profiles 3, 4. In general the cable reel 6 and cable 5 may be arranged so that cable 5 is located either in front of the screening means 10, behind the screening means 10, or so that the cable is located next to the screening means 10, e.g. in the plane of the screening means. The cable 5 may be arranged so that the cable contacts the screening means, but preferably in such a way that the cable is not in a fixed connection with the screening means 10.

Fig. 3B illustrates a side view of an embodiment of the screening device 1 - similar to the screening device in Fig. 3A - but where the cable reel 6 is arranged together with the first transversal profile 3.

Fig. 3C illustrates a side view of an embodiment of the screening device 1 - similar to the screening devices in Figs. 3A-B - but where the screening material 10 may be in the form of a venetian blind or a folding blind. In this case the screening material may be connected directly to the first and second transversal profiles 3, 4. The screening device in Fig. 3C is illustrated with two cable reels 6, one arranged together with the first transversal profile 3 and the other reel arranged together with the second transversal profile 4. Clearly, the screening device in Fig. 3C may alternatively be configured with one cable reel 6 arranged together with only one of the first and second transversal profiles. Thus, in general, the screening device 1 may be provided with at least one or two cable reels.

Any of the examples of the screening devices 1 in Fig. 3A-C may be configured without an electrical motor 8 or with an electrical motor 8 in one of the transversal profiles, or possibly in both of the first and second transversal profiles.

Figs. 4A-C illustrate different examples of the cable reel 6.

Fig. 4A illustrates an example of the cable reel 6 arranged for rolling the cable 5 up on a rotatable spool 20. According to a further example, the cable reel 6 comprises transmission means 15 arranged for transmitting the signal between a stationary part 16 and a rotatable part 17 of the cable reel. The spool 20 may comprise the rotatable part 17, or the spool 20 and rotatable part 17 may be seen as corresponding structures.

The transmission means 15 may be connected with the stationary transmission part 31 and the proximal end 30 of the cable 5.

As an example, the transmission means 15 may comprise first and second wireless transmission devices 32, 33 arranged for transmitting power signals and/or data or control signals. For example, the first and second wireless transmission devices 32, 33 may comprise a wireless transmitter and a wireless receiver, respectively, for transmitting data or control signals. Alternatively, the first and second wireless transmission devices 32, 33 may comprise transceivers for two-way communication. The first and second wireless transmission devices 32, 33 may be based on optical, radio frequency, magnetic, electromagnetic or ultrasound transmission, or a combination thereof. For example, the transmission means 15 may be configured for wireless power transmission based on electrical, magnetic or electromagnetic transmission. Accordingly, the transmission means 15 may be configured for wireless transmission of power and/or control/data signals to or from the cable 5.

As another example, the transmission means 15 may comprise a sliding contact connection (not illustrated), e.g. in the form of collector shoes, for transmitting power and/or data/control signals between the stationary part 16 and the rotatable part 17.

Fig. 4B illustrates an example of the cable reel 6 where the transmission means 15 comprises a first cable portion 18 arranged for transmitting the signal between the stationary part 16 and a second cable portion 19 of the cable 5. The second cable portion 19 may constitute an arbitrary portion of the cable 5. The first cable portion 19 may also constitute a portion of the cable 5. The first cable portion 18 is electrically connected with the second cable portion 19, e.g. via a connector. Alternatively, the first and second cable portions 18, 19 may constitute portions of a single cable 5. In this example, the first cable portion 18 is wound around the stationary part 16 in a way so that the first cable portion can be rotated relative to the stationary part without restraining rotation of the spool 20.

Fig. 4C illustrates an alternative example of the cable reel 6 where the transmission means 15 comprises a first cable portion 18. In this example, a suitable length of the first cable portion 18 is arranged, e.g. as randomly arranged loops in a hollow cavity of the spool 20, so that the first cable portion can be rotated relative to the stationary part without restraining motion of the spool 20. Similarly to the cable reel 6 in Fig. 4B, the first cable portion 18 may also constitute a portion of the cable 5, or may be a separate cable which is connected with the second cable portion 19.

The screening device 1 may be configured so that the cable 5, or first and second cable portions 18, 19, provides a continuous electrical conducting connection between the first and second profiles 3, 4. The continuous electrical connection may be a non-interrupted connection constituted by a single cable, or the continuous electrical connection may be a non-interrupted connection comprising one or more connectors, e.g. comprising a connector connecting the first and second cable portion 18, 19.

Figs. 4A-C illustrate embodiments where the cable reel 6 comprises a spring 7. The function of the spring 7 is explained in connection with Figs. 3A-C.

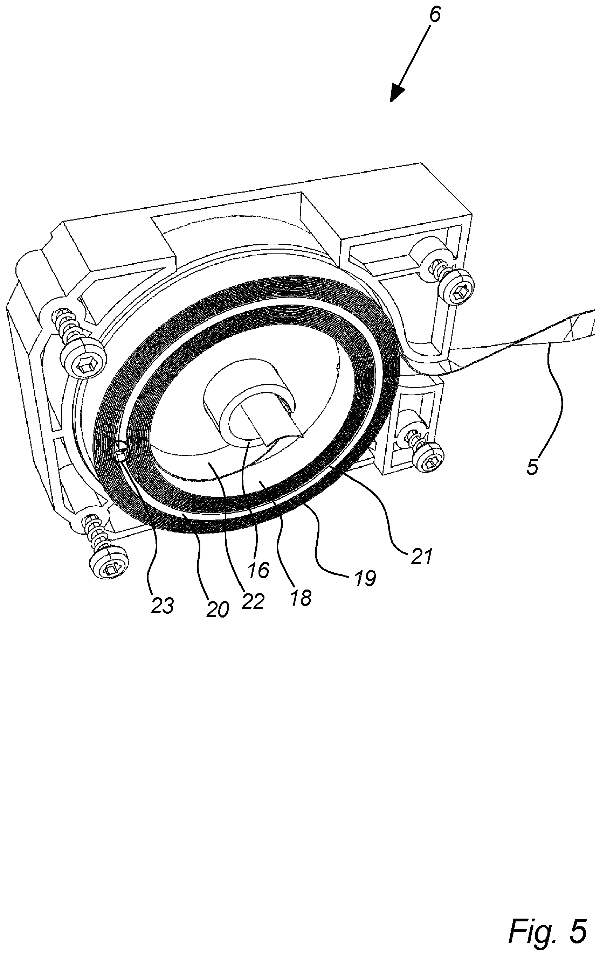

Fig. 5 illustrates an example of the cable reel 5. The cable reel 6 comprises a rotatable spool 20, a stationary part 16, and a circumscribing part 21 which is arranged so that it rotates with the spool 20. In this example, the rotatable spool 20 and the circumscribing part 21 comprises the same structure, i.e. a cylindrical structure arranged to be rotatable relative to the stationary part 16. Further to this example, the circumscribing part 21 is constituted by the inner cylindrical surface of the cylindrical structure and the rotatable spool 20 is constituted by the outer cylindrical surface of the cylindrical structure.

The rotatable spool 20 and the circumscribing part 21may have other geometric shapes than cylindrical shapes, e.g. polygonal shapes. Furthermore, the rotatable spool 20 and the circumscribing part 21need not be formed by a structure which forms a non-interrupted circumscribing path, but may be formed by pins or the like arranged along a circumscribing path, e.g. by a finite number of pins arranged along a path that circumscribes the stationary part 21.

The spool 20 and the circumscribing part 21 may be formed by the same structure or may be formed by separate structures. For example, the spool 20 and the circumscribing part 21 may be formed by different cylindrical structures which are concentric, but which have different axial locations.

In general, the spool 20, the circumscribing part 21 or both at least partially circumscribes the stationary part. That is, the spool 20, the circumscribing part 21 or both may be formed by structures which form an interrupted or non-interrupted circumscribing path.

The example of the cable reel 5 in Fig. 5 further comprises a first cable portion 18 having a first end 22 connected to the stationary part 16. The first cable portion 18 extends from the stationary part 16 to an engagement location 23 of the circumscribing part 21. As illustrated the first cable portion 18 is arranged as windings forming a spiral which circumscribes the stationary portion 16. In this example, the first cable portion 18 is in the form of a ribbon cable forming concentric windings which extend radially. The windings of the first cable portion are constrained from expanding radially by the circumscribing part 21.

The cable reel 5 in Fig. 5 further comprises a second cable portion 19 comprised by the cable 5. The second cable portion 19 is arranged to be stored on the rotatable spool 20. The second cable portion 19 extends from the engagement location 23 and as shown in Fig. 5, the second cable portion 19 is in the form of a ribbon cable forming concentric windings which extend radially. The first cable portion 18 is connected with the second cable portion 19. The first cable portion may be connected to the second cable portion, e.g. at the engagement location 23, by means of a connector, a solder joint or the like. Alternatively, the first and second cable portions 18 may be comprised by a single unbroken cable 5 which extends from the circumscribing part 21 to the spool 20 via a passageway, e.g. a passageway formed in the circular structure at the engagement location 23.

According to the example in Fig. 5, the first cable portion 18 is arranged to allow the first cable portion to be rotated around the stationary part 16 at the engagement location 23 so that rotation of the spool 20 causes tightening or loosening of windings of the first cable portion 18. Thus, when the spool 20 is rotated in one direction the windings of the first cable portion 18 will loosen and expand against the circumscribing part 21, and when the spool 20 is rotated in the other direction the windings of the first cable portion 18 will be tightened against the stationary part 16.

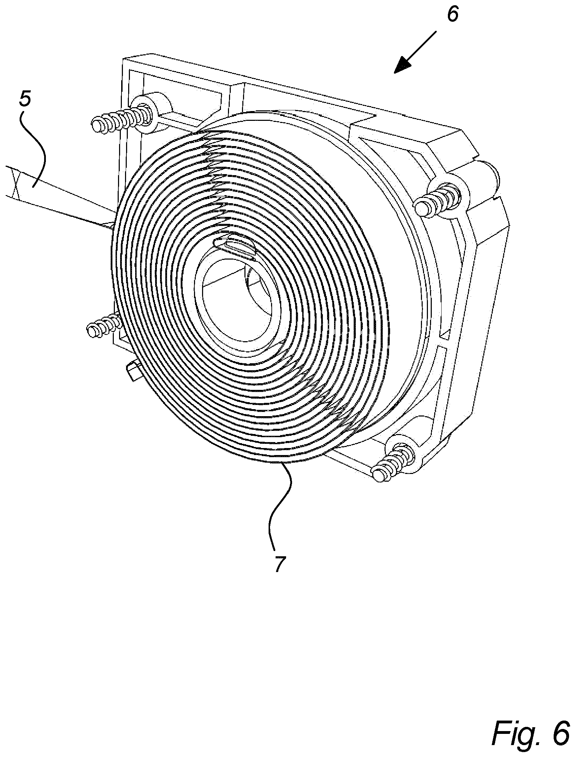

Fig. 6 illustrates how the spring 7 can be arranged as a spiral spring on the cable reel 6. This example applies equally with other examples of the cable reel 6. As illustrated, the spring 7 is arranged on one side of the cable reel 6 and the spool 20 is arranged on an opposite side of the cable reel 6. One end of the spiral spring 7 is connected to a stationary part of the cable reel 6, e.g. the stationary part 16, and another end of the spring 7 is connected with the spool 20 or rotatable part 17 so that the spring 7 is tensioned or tightened when the cable 5 is rolled off from the spool and relaxed when the cable 5 is rolled onto the spool. The cable reel 6 illustrated in Figs. 5 and 6 may, as previously explained, be provided with a position means 24 (not illustrated).

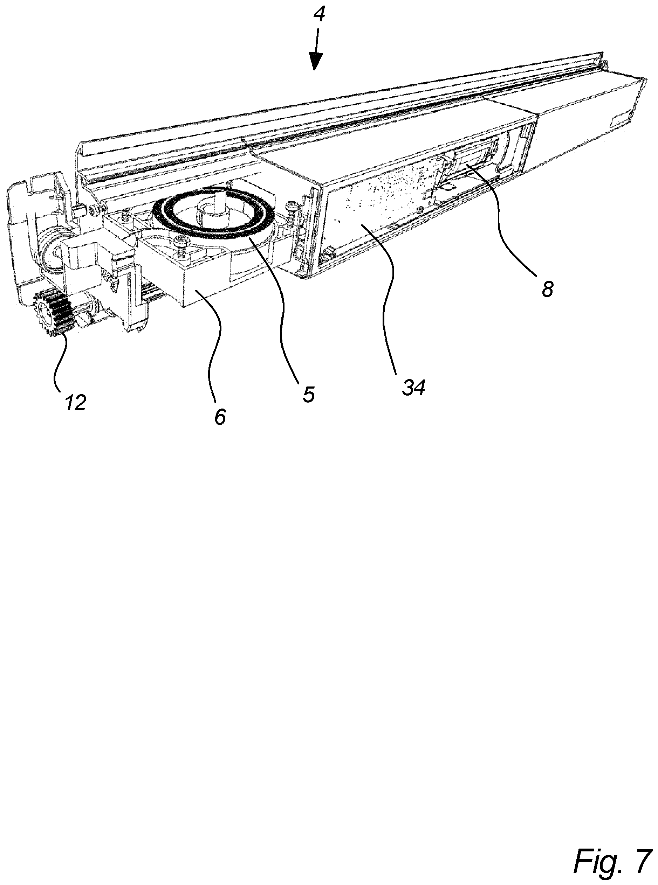

Fig. 7 illustrates an example of the second transversal profile 4. The second transversal profile 4 comprises the cable reel 6 which is arranged in one end of the transversal profile 4. The cable reel 6 is oriented so that the rotation axis of the rotatable spool 20 is perpendicular or substantially perpendicular to the longitudinal extension of the second transversal profile. In this way, the second transversal profile can be made thin in the direction perpendicular to the window surface. The second transversal profile 4 further comprises the electrical motor 8 and control electronics 34 for controlling the motor 8. Accordingly, electrical power for the motor 8 and control signals for the control electronics 34 can be transmitted via the cable 5. As illustrated, the second transversal profile 4, further comprises engaging means 12 arranged to be driven by the motor 8 for moving the second transversal profile 4.

Fig. 8 illustrates a screening device 1 and a window 2 mounted in an inclined roof surface 35 of a building 36, as seen from the front.

Screening devices 1 used in a window 2 in an inclined roof surface 35 may advantageously have a motor 8 provided in the second transversal profile 4, e.g. for moving the screening means 10 in situations where the window has been rotated to a horizontal orientation. Accordingly, screening devices 1 according to embodiments of the invention may be particularly advantageous for such uses due to the cable 5 and cable reel 6 which provide a reliable transfer of data signals, e.g. power, to the motor 8.

Use of the screening device 1 is not limited to windows 2 mounted in inclined roof structures. Thus, the embodiments of the screening device 1 may be used with any type of window and in general with any kind of architectural opening, door, hole and other openings.

The invention has been exemplified above with reference to specific examples of designs and embodiments of screening devices 1, transversal profiles 3, 4, cables 5, and cable reels 6, etc. However, it should be understood that the invention is not limited to the particular examples described above but may be designed and altered in a multitude of varieties within the scope of the invention as specified in the claims.

### List

- 1.: Screening device
- 2.: Architectural opening
- 3.: First transversal profile
- 4.: Second transversal profile
- 5.: Cable
- 6.: Cable reel
- 7.: Spring
- 8.: Electrical motor
- 9.: Lifting arrangement
- 10.: Screening means
- 11.: Guide means
- 12.: Engaging means
- 13.: Traction means
- 14.: Electrical consumer
- 15.: Transmission means
- 16.: Stationary part
- 17.: Rotatable part
- 18.: First cable portion
- 19.: Second cable portion
- 20.: Rotatable spool
- 21.: Circumscribing part
- 22.: First end
- 23.: Engagement location
- 24.: Position means
- 25.: Ends of second transversal profile
- 26.: First end of screening means
- 27.: Second end of screening means
- 28.: Roller
- 29.: Distal end of cable
- 30.: Proximal end of cable
- 31.: Stationary transmission part
- 32.: First wireless communication device
- 33.: Second wireless communication device
- 34.: Control electronics
- 35.: Roof surface
- 36.: Building

## Claims

1. A screening device (1) for an architectural opening (2), the screening device comprises:
a first transversal profile (3) arranged to have a fixed position relative to the architectural opening,
a second transversal profile (4) arranged to be moveable relative to the first transversal profile,
screening means (10) extending between the first and second transversal profiles,
a cable (5) extending between the first transversal profile and the second transversal profile for transmitting a signal between the first transversal profile and the second transversal profile,
**characterized in that** the first transversal profile and/or the second transversal profile comprises a cable reel (6) arranged for rolling off and rolling up the cable dependent on the relative movement between the first transversal profile and the second transversal profile, and where the cable reel is arranged for rolling off the cable by a force transmitted by the cable.

2. A screening device according to any of the preceding claims, where the cable reel comprises a spring (7) arranged for rolling up the cable.

3. A screening device according to claim 2, where the spring (7) is arranged to be tensioned dependent on the extension of the cable between the first and second transversal profiles and independent on an extension of the screening means (10) between the first and second transversal profiles.

4. A screening device according to any of the preceding claims, where one of the transversal profiles comprises an electrical motor (8) arranged to cause a movement of the second transversal profile.

5. A screening device according to claim 4, where the electrical motor is arranged to cause the movement of the second transversal profile through interaction with a lifting arrangement (9).

6. A screening device according to any of the preceding claims, where one of the first and second transversal profiles comprises an electrical consumer (14), and where the signal comprises electrical power and/or control information.

7. A screening device according to any of the preceding claims, where the second transversal profile (4) comprises the cable reel (6).

8. A screening device according to any of the preceding claims, where the cable reel comprises transmission means (15) arranged for transmitting the signal between a stationary part (16) and a rotatable part (17) of the cable reel, the stationary part being stationary relative to the rotatable part of the cable reel.

9. A screening device according to claim 8, where the transmission means comprises a first cable portion (18) arranged for transmitting the signal between the stationary part (16) and a second cable portion (19) of the cable.

10. A screening device according to claim 9, where the first and second cable portions are arranged to provide a continuous connection between the first and second transversal profiles.

11. A screening device according to any of the preceding claims, where the cable reel (6) comprises, a rotatable spool (20), a stationary part (16), a circumscribing part (21) being co-rotational with the spool and at least partially circumscribing the stationary part, a first cable portion (18) having a first end (22) connected to the stationary part and extending from the stationary part to an engagement location (23) of the circumscribing part, a second cable portion (19) comprised by the cable (5) and extending from the engagement location, the first cable portion being connected with the second cable portion, where the second cable portion is arranged to be stored on the rotatable spool, and where the first cable portion is arranged to allow the first cable portion to be rotated around the stationary part at the engagement location.

12. A screening device according to any of the preceding claims, where the cable reel comprises a position means (24) arranged for detecting at least a change of the position of the second transversal profile.

13. A screening device according to claim 12, where the position means (24) is arranged to transmit position information via the cable, where the position information relates to the detected position change.

14. A method for transmitting signals in a screening device (1) for a architectural opening (2), the method comprises
moving a first transversal profile (3) and/or a second transversal profile (4) to cause relative movement between the first and second profiles, **characterized in** rolling off a cable (5) from a cable reel (6) comprised by the first transversal profile and/or the second transversal profile, where the cable extends between the first transversal profile and the second transversal profile, and where the cable is rolled off by means of a force transmitted by the cable,
transmitting a signal between the first transversal profile and the second transversal profile by means of the cable.

15. A method according to claim 14, wherein the screening device (1) is a screening device according to any of claims 1-13.

## Patentansprüche

1. Abschirmvorrichtung (1) für eine Gebäudeöffnung (2), wobei die Abschirmvorrichtung Folgendes umfasst:
ein erstes querlaufendes Profil (3), das dafür eingerichtet ist, in Bezug auf die Gebäudeöffnung eine feste Position zu haben,
ein zweites querlaufendes Profil (4), das dafür eingerichtet ist, in Bezug auf das erste querlaufende Profil eine veränderbare Position zu haben,
ein Abschirmmittel (10), das sich zwischen dem ersten und zweiten querlaufenden Profil erstreckt,
ein Kabel (5), das sich zwischen dem ersten querlaufenden Profil und dem zweiten querlaufenden Profil erstreckt, um zwischen dem ersten querlaufenden Profil und dem zweiten querlaufenden Profil ein Signal zu übertragen,
**dadurch gekennzeichnet, dass**
das erste querlaufende Profil und/oder das zweite querlaufende Profil eine Kabelaufrollung (6) umfasst, die dafür eingerichtet ist, das Kabel abzurollen und aufzurollen, in Abhängigkeit von der relativen Bewegung zwischen dem ersten querlaufenden Profil und dem zweiten querlaufenden Profil, und wobei die Kabelaufrollung dafür eingerichtet ist, das Kabel durch eine Kraft abzurollen, die durch das Kabel übertragen wird.

2. Abschirmvorrichtung nach einem der vorhergehenden Ansprüche, wobei die Kabelaufrollung eine Feder (7) umfasst, die dafür eingerichtet ist, das Kabel aufzurollen.

3. Abschirmvorrichtung nach Anspruch 2, wobei die Feder (7) dafür eingerichtet ist, in Abhängigkeit von der Erstreckung des Kabels zwischen dem ersten und zweiten querlaufenden Profil gespannt zu sein, und unabhängig von einer Erstreckung des Abschirmmittels (10) zwischen dem ersten und zweiten querlaufenden Profil.

4. Abschirmvorrichtung nach einem der vorhergehenden Ansprüche, wobei eines der querlaufenden Profile einen Elektromotor (8) umfasst, der dafür eingerichtet ist, eine Bewegung des zweiten querlaufenden Profils zu bewirken.

5. Abschirmvorrichtung nach Anspruch 4, wobei der Elektromotor dafür eingerichtet ist, die Bewegung des zweiten querlaufenden Profils durch das Zusammenwirken mit einer Hebeeinrichtung (9) zu bewirken.

6. Abschirmvorrichtung nach einem der vorhergehenden Ansprüche, wobei eines von dem ersten und zweiten querlaufenden Profil einen elektrischen Verbraucher (14) umfasst und wobei das Signal elektrische Leistung und/oder Steuerinformation umfasst.

7. Abschirmvorrichtung nach einem der vorhergehenden Ansprüche, wobei das zweite querlaufende Profil (4) die Kabelaufrollung (6) umfasst.

8. Abschirmvorrichtung nach einem der vorhergehenden Ansprüche, wobei die Kabelaufrollung ein Übertragungsmittel (15) umfasst, das dafür eingerichtet ist, das Signal zwischen einem feststehenden Teil (16) und einem drehbaren Teil (17) der Kabelaufrollung zu übertragen, wobei der feststehenden Teil relativ zum drehbaren Teil der Kabelaufrollung feststehend ist.

9. Abschirmvorrichtung nach Anspruch 8, wobei das Übertragungsmittel einen ersten Kabelabschnitt (18) umfasst, der dafür eingerichtet ist, das Signal zwischen dem feststehenden Teil (16) und einem zweiten Kabelabschnitt (19) des Kabels zu übertragen.

10. Abschirmvorrichtung nach Anspruch 9, wobei der erste und zweite Kabelabschnitt dafür eingerichtet sind, eine kontinuierliche Verbindung zwischen dem ersten und zweiten querlaufenden Profil bereitzustellen.

11. Abschirmvorrichtung nach einem der vorhergehenden Ansprüche, wobei die Kabelaufrollung (6) Folgendes umfasst: eine drehbare Spule (20), einen feststehenden Teil (16), einen umlaufenden Teil (21), der sich zusammen mit der Spule dreht und der den feststehenden Teil wenigstens teilweise umgibt, einen ersten Kabelabschnitt (18), der ein erstes Ende (22) hat, das mit dem feststehenden Teil verbunden ist, und sich vom feststehenden Teil zu einer Kuppelstelle (23) des umlaufenden Teils erstreckt, einen zweiten Kabelabschnitt (19), der im Kabel (5) enthalten ist und der sich ausgehend von der Kuppelstelle erstreckt, wobei der erste Kabelabschnitt mit dem zweiten Kabelabschnitt verbunden ist und wobei der zweite Kabelabschnitt dafür eingerichtet ist, auf der drehbaren Spule untergebracht zu werden, und wobei der erste Kabelabschnitt dafür eingerichtet ist, es dem ersten Kabelabschnitt zu ermöglichen, an der Kuppelstelle um den feststehenden Teil herum gedreht zu werden.

12. Abschirmvorrichtung nach einem der vorhergehenden Ansprüche, wobei die Kabelaufrollung ein Positionsmittel (24) umfasst, das dafür eingerichtet ist, wenigstens eine Änderung der Position des zweiten querlaufenden Profils zu detektieren.

13. Abschirmvorrichtung nach Anspruch 12, wobei das Positionsmittel (24) dafür eingerichtet ist, Positionsinformation über das Kabel zu übertragen und wobei die Positionsinformation die detektierte Positionsänderung betrifft.

14. Verfahren zum Übertragen von Signalen in einer Abschirmvorrichtung (1) für eine Gebäudeöffnung (2), wobei das Verfahren Folgendes umfasst:
Bewegen eines ersten querlaufenden Profils (3) und/oder eines zweiten querlaufenden Profils (4), um eine relative Bewegung zwischen dem ersten und zweiten Profil zu bewirken, und durch Folgendes gekennzeichnet ist:
Abrollen eines Kabels (5) von einer Kabelaufrollung (6), die im ersten querlaufenden Profil und/oder dem zweiten querlaufenden Profil enthalten ist, wobei das Kabel sich zwischen dem ersten querlaufenden Profil und dem zweiten querlaufenden Profil erstreckt und wobei das Kabel durch eine Kraft abgerollt wird, die durch das Kabel übertragen wird,
Übertragen eines Signals zwischen dem ersten querlaufenden Profil und dem zweiten querlaufenden Profil mittels des Kabels.

15. Verfahren nach Anspruch 14, wobei die Abschirmvorrichtung (1) eine Abschirmvorrichtung nach einem der Ansprüche 1 bis 13 ist.

## Revendications

1. Dispositif d'écran (1) pour une ouverture architecturale (2), le dispositif d'écran comprend :
un premier profil transversal (3) agencé pour avoir une position fixe par rapport à l'ouverture architecturale,
un deuxième profil transversal (4) agencé pour être mobile par rapport au premier profil transversal,
un moyen d'écran (10) s'étendant entre les premier et deuxième profils transversaux,
un câble (5) s'étendant entre le premier profil transversal et le deuxième profil transversal pour la transmission d'un signal entre le premier profil transversal et le deuxième profil transversal,
**caractérisé en ce que**
le premier profil transversal et/ou le deuxième profil transversal comprend un enrouleur de câble (6) agencé pour dérouler et enrouler le câble en fonction du mouvement relatif entre le premier profil transversal et le deuxième profil transversal, et dans lequel l'enrouleur de câble est agencé pour dérouler le câble par une force transmise par le câble.

2. Dispositif d'écran selon l'une quelconque des revendications précédentes, dans lequel l'enrouleur de câble comprend un ressort (7) agencé pour enrouler le câble.

3. Dispositif d'écran selon la revendication 2, dans lequel le ressort (7) est agencé pour être tendu en fonction de l'extension du câble entre les premier et deuxième profils transversaux et indépendamment d'une extension du moyen d'écran (10) entre les premier et deuxième profils transversaux.

4. Dispositif d'écran selon l'une quelconque des revendications précédentes, dans lequel un des profils transversaux comprend un moteur électrique (8) agencé pour provoquer un mouvement du deuxième profil transversal.

5. Dispositif d'écran selon la revendication 4, dans lequel le moteur électrique est agencé pour provoquer le mouvement du deuxième profil transversal par interaction avec un agencement de levage (9).

6. Dispositif d'écran selon l'une quelconque des revendications précédentes, dans lequel un des premier et deuxième profils transversaux comprend un consommateur électrique (14), et dans lequel le signal comprend une puissance électrique et/ou des informations de commande.

7. Dispositif d'écran selon l'une quelconque des revendications précédentes, dans lequel le deuxième profil transversal (4) comprend l'enrouleur de câble (6).

8. Dispositif d'écran selon l'une quelconque des revendications précédentes, dans lequel l'enrouleur de câble comprend un moyen de transmission (15) agencé pour la transmission du signal entre une partie stationnaire (16) et une partie rotative (17) de l'enrouleur de câble, la partie stationnaire étant stationnaire par rapport à la partie rotative de l'enrouleur de câble.

9. Dispositif d'écran selon la revendication 8, dans lequel le moyen de transmission comprend une première portion de câble (18) agencée pour transmettre le signal entre la partie stationnaire (16) et une deuxième portion de câble (19) du câble.

10. Dispositif d'écran selon la revendication 9, dans lequel les première et deuxième portions de câble sont agencées pour fournir une liaison continue entre les premier et deuxième profils transversaux.

11. Dispositif d'écran selon l'une quelconque des revendications précédentes, dans lequel l'enrouleur de câble (6) comprend, une bobine rotative (20), une partie stationnaire (16), une partie circonscrivante (21) qui est co-rotative avec la bobine et circonscrivant au moins partiellement la partie stationnaire, une première portion de câble (18) ayant une première extrémité (22) reliée à la partie stationnaire et s'étendant de la partie stationnaire à un emplacement de mise en prise (23) de la partie circonscrivante, une deuxième portion de câble (19) constituée par le câble (5) et s'étendant de l'emplacement de mise en prise, la première portion de câble étant reliée à la deuxième portion de câble, dans lequel la deuxième portion de câble est agencée pour être stockée sur la bobine rotative, et dans lequel la première portion de câble est agencée pour permettre à la première portion de câble d'être mise en rotation autour de la partie stationnaire au niveau de l'emplacement de mise en prise.

12. Dispositif d'écran selon l'une quelconque des revendications précédentes, dans lequel l'enrouleur de câble comprend un moyen de position (24) agencé pour détecter au moins un changement de la position du deuxième profil transversal.

13. Dispositif d'écran selon la revendication 12, dans lequel le moyen de position (24) est agencé pour transmettre des informations de position via le câble, dans lequel les informations de position concernent le changement de position détecté.

14. Procédé de transmission de signaux dans un dispositif d'écran (1) pour une ouverture architecturale (2), le procédé comprend
le déplacement d'un premier profil transversal (3) et/ou d'un deuxième profil transversal (4) pour entraîner un mouvement relatif entre les premier et deuxième profils, **caractérisé par**
le déroulement d'un câble (5) d'un enrouleur de câble (6) constitué par le premier profil transversal et/ou le deuxième profil transversal, dans lequel le câble s'étend entre le premier profil transversal et le deuxième profil transversal, et dans lequel le câble est déroulé au moyen d'une force transmise par le câble,
la transmission d'un signal entre le premier profil transversal et le deuxième profil transversal au moyen du câble.

15. Procédé selon la revendication 14, dans lequel le dispositif d'écran (1) est un dispositif d'écran selon l'une quelconque des revendications 1-13.
